# EUROPÄISCHE PATENTSCHRIFT

(11) **EP 2 268 932 B1**
(45) Veröffentlichungstag und Bekanntmachung des Hinweises auf die Patenterteilung: **20.06.2012**
(21) Anmeldenummer: 09734542.5
(22) Anmeldetag: 02.04.2009
(51) Int. Cl.: F16C 19/56, F16C 33/36, F16C 33/48, F16C 19/38

(54) **SCHRÄGWÄLZLAGER, INSBESONDERE ZWEIREIHIGES TANDEM-KUGELROLLENLAGER**
ANGULAR CONTACT ROLLING-ELEMENT BEARING, ESPECIALLY DOUBLE ROW BALL ROLLER BEARING IN TANDEM ARRANGEMENT
ROULEMENT A CONTACT OBLIQUE, EN PARTICULIER ROULEMENT A ROULEAUX SPHERIQUES A DEUX RANGEES EN TANDEM

(30) Priorität: 24.04.2008 DE 102008020547
(43) Veröffentlichungstag der Anmeldung: 05.01.2011
(73) Patentinhaber: Schaeffler Technologies AG & Co. KG, 91074 Herzogenaurach (DE)
(72) Erfinder: BOHR, Andreas, 91074 Herzogenaurach (DE); DÖPPLING, Horst, 91074 Herzogenaurach (DE); HOFMANN, Heinrich, 97422 Schweinfurt (DE); MARTIN, Peter, 91462 Dachsbach (DE)
(86) Internationale Anmeldenummer: PCT/EP2009/053934
(87) Internationale Veröffentlichungsnummer: WO 2009/130119

(56) Entgegenhaltungen:
- EP-A- 1 361 373
- WO-A-2008/006338
- WO-A-2008/052875
- DE-A1- 19 839 481
- DE-A1-102006 003 691
- DE-A1-102006 035 163
- US-A1- 2003 142 893

## Beschreibung

### Gebiet der Erfindung

Die Erfindung betrifft ein Schrägwälzlager nach den oberbegriffsbildenden Merkmalen des Patentanspruchs 1, und sie insbesondere vorteilhaft an zweireihigen Tandem-Kugelrollenlagern anwendbar, die als Ersatz für bisher an gleicher Stelle eingesetzte Kegelrollenlager oder Tandem-Schrägkugellager vorgesehen sind.

### Hintergrund der Erfindung

Dem Fachmann in der Wälzlagertechnik ist es allgemein bekannt, dass die Abstützung von Wellen oder Naben mit axialer und radialer Momentbelastung zumeist über Schrägwälzlager erfolgt, die aufgrund der hohen Beanspruchung in aller Regel als zwei gegeneinander angestellte sowie in Axialrichtung vorgespannte Kegelrollenlager ausgebildet sind. Diese Kegelrollenlager werden bei hohen auftretenden Axialkräften mit einem großen Druckwinkel ausgebildet und sorgen für eine hohe Steifigkeit der abgestützten Welle.

Da bei derartigen Kegelrollenlagern jedoch aufgrund ihrer Vorspannung zwischen der Stirnfläche der Kegelrollen und der Führungsfläche des Lagerbords eine gleitende Reibung einsetzt, durch die es zu einem Verschleiß an den Kegelrollen und am Lagerbord kommt, wurde es durch die DE 198 39 481 A1 vorgeschlagen, die Kegelrollenlager durch einseitig belastbare zweireihige Tandem-Schrägkugellager zu ersetzen, die zueinander in O-Anordnung angestellt sind. Durch den Einsatz solcher Tandem-Schrägkugellager anstelle von Kegelrollenlagern sollte dabei erreicht werden, dass sich aufgrund der nunmehr entfallenden Gleitreibung zwischen den Lagerkugeln und den Laufbahnschultern ein wesentlich geringeres Reibmoment ergibt, durch das der Verschleiß und die Temperatur des Lagers gesenkt und dessen Wirkungsgrad verbessert wird.

Dennoch hat sich ein solcher Ersatz von Kegelrollenlagern durch zweireihige Tandem-Schrägkugellager in der Praxis dahingehend als nachteilig erwiesen, dass diese Tandem-Schrägkugellager durch die nebeneinander angeordneten Laufbahnen für die Lagerkugeln sowie durch die zum Erreichen der erforderlichen Traglast großen Durchmesser der Lagerkugeln im Vergleich zu Kegelrollenlagern einen erhöhten axialen Einbauraum erfordern. Soll ein solches Tandem-Schrägkugellager darüber hinaus noch eine höhere Traglast als ein Kegelrollenlager aufweisen, sind somit aufwändige Änderungen der Lagersitze notwendig, welche die Herstellungskosten des jeweiligen Bauteils in nachteiliger Weise erhöhen. Darüber hinaus verursachen solche zweireihigen Tandem-Schrägkugellager gegenüber Kegelrollenlagern auch einen erhöhten Fertigungs- und Materialaufwand bei der Lagerherstellung, so dass sich deren Herstellungskosten ebenfalls erhöhen.

Zur Vermeidung dieser Nachteile wurde es deshalb durch die DE 10 2005 014 556 vorgeschlagen, bei einem bekanntermaßen aus einem inneren und einem äußeren Lagerring bestehenden zweireihigen Schrägwälzlager die zwischen den Lagerringen angeordneten Wälzkörper jeder Reihe anstelle von Lagerkugeln als Kugelrollen mit jeweils zwei symmetrisch von einer Kugelgrundform abgeflachten sowie parallel zueinander angeordneten Seitenflächen auszubilden und beide Reihen ähnlich wie bei Tandem-Schrägkugellagern mit unterschiedlichen Teilkreisdurchmessern höhenversetzt nebeneinander anzuordnen. Die Kugelrollen der Reihe auf dem größeren Teilkreis weisen dabei in ihrer Kugelgrundform einen größeren Durchmesser als die Kugelrollen der Reihe auf dem kleineren Teilkreis auf und beide Reihen werden bei gegenseitiger Führung der jeweils benachbarten Kugelrollen durch einen gemeinsamen Lagerkäfig in Umfangsrichtung in gleichmäßigen Abständen zueinander gehalten. Darüber hinaus rollen die Kugelrollen beider Reihen mit ihren Laufflächen in jeweils zwei benachbarten rillenförmigen Laufbahnen im äußeren und im inneren Lagerring ab, die parallel zueinander verlaufende Druckwinkelachsen aufweisen und derart aneinander angrenzend angeordnet sind, dass die jeweils benachbarten Kugelrollen beider Reihen auf einer gemeinsamen, rechtwinklig zu den Druckwinkelachsen verlaufenden Rotationsachse angeordnet sind. Durch die Verwendung von Kugelrollen als Wälzkörper soll sich ein solches Schrägwälzlager gegenüber mehrreihigen Schrägkugellagern vor allem durch einen minimierten axialen und radialen Einbauraum sowie durch eine gleiche oder erhöhte Tragfähigkeit bei vergleichbaren Herstellungskosten auszeichnen.

In der Praxis hat es sich bei dem mit der DE 10 2005 014 556 vorgeschlagen Tandem-Kugelrollenlager jedoch gezeigt, dass der durch die gemeinsame Rotationsachse der jeweils benachbarten Kugelrollen beider Reihen angestrebte Synchronlauf zwischen den in einer gemeinsamen Käfigtasche angeordneten Kugelrollen unter bestimmten Lastverhältnissen verloren geht, mit der Folge, dass zwischen den zueinander weisenden Seitenflächen der jeweils benachbarten Kugelrollen durch unterschiedliche Umdrehungsgeschwindigkeiten Reibung entsteht. Treten diese ungünstigen Lastverhältnisse länger oder in kurzen Zeitabständen häufiger auf, verursacht diese Reibung zwischen den Kugelrollen eine erhebliche Temperaturerhöhung im Lager, aus der eine Mangelschmierung im Wälzkontakt bis hin zum Schmierfilmabriss und dem Ausfall des Lagers resultieren kann. Darüber hinaus hat sich auch das unmittelbare Ineinanderübergehen der Laufbahnen der Kugelrollen vor allem im inneren Lagerring für die Lagerkinematik als nachteilig erwiesen, da dies speziell bei einem sich während des Lagerbetriebes durch Laständerungen verkleinernden Druckwinkels dazu führt, dass die Kugelrollen der Reihe auf dem größeren Teilkreis mit ihren Randpartien aus ihrer Laufbahn geringfügig herausschwenken und somit nur noch eine reduzierte Kontaktfläche zu ihrer Laufbahn aufweisen. Dies hat wiederum zur Folge, dass die aus der Lagerlast resultierende Druckellipse in der Laufbahn zumindest teilweise abgeschnitten wird und es zum Abrollen der Kugelrollen auf der Kante ihrer Laufbahn und dadurch zu Beschädigungen an den Laufflächen der Kugelrollen und an deren Laufbahn kommt.

Die W02008/006338 A1 zeigt ein zweireihiges Tandem-Kugelrollenlager mit Kugelrollen, die in zwei Reihen mit unterschiedlichen Teilkreisdurchmessern höhenversetzt nebeneinander angeordnet sind und durch zwei gesonderte sowie zueinander beabstandete Lagerkäfige gehalten werden.

### Aufgabe der Erfindung

Ausgehend von den dargelegten Nachteilen des bekannten Standes der Technik liegt der Erfindung deshalb die Aufgabe zu Grunde, ein Schrägwälzlager, insbesondere zweireihiges Tandem-Kugelrollenlager, zu konzipieren, bei welchem die unter bestimmten Lastverhältnissen auftretende Reibung zwischen den zueinander weisenden Seitenflächen der jeweils benachbarten Kugelrollen und die bei sich verkleinernden Druckwinkel auftretende Reduzierung der Kontaktfläche der Kugelrollen zu ihren Laufbahnen ausgeschlossen ist.

### Beschreibung der Erfindung

Erfindungsgemäß wird diese Aufgabe bei einem Schrägwälzlager mit den Merkmalen des Oberbegriffs des Anspruchs 1 derart gelöst, dass dessen gesonderten Lagerkäfige zumindest teilweise ineinander verschachtelte Konturen aufweisen und zumindest die am inneren Lagerring angeordnete Laufbahn der Kugelrollen der Reihe mit dem größeren Teilkreis unter Nutzung dieses Abstandes mit einer einseitigen radienförmigen Verlängerung ausgebildet ist.

Der Erfindung liegt somit die Erkenntnis zugrunde, dass es durch eine gezielte Trennung bzw. axial zueinander beabstandete Anordnung beider Reihen der Kugelrollen in einfacher Weise möglich ist, ohne wesentliche Vergrößerung des axialen Bauraums des Tandem-Kugelrollenlagers die bisher im Lagerbetrieb auftretenden Nachteile zu beseitigen.

Bevorzugte Ausgestaltungen und Weiterbildungen des erfindungsgemäß ausgebildeten Schrägwälzlagers werden in den Unteransprüchen beschrieben.

Als zweckmäßige Weiterbildung der Lagerkäfige des erfindungsgemäß ausgebildeten Wälzlagers wird es durch Anspruch 2 des Weiteren noch vorgeschlagen, dass beide Lagerkäfige des Kugelrollenlagers bevorzugt als Kunststoff-Fensterkäfige ausgebildet sind, die jeweils aus einem Käfigring mit größerem Durchmesser und einem Käfigring mit kleinerem Durchmesser sowie einer Vielzahl, die Käfigringe miteinander verbindender Käfigstege bestehen. Dabei bilden die Käfigringe und die Käfigstege beider Lagerkäfige des Kugelrollenlagers gemäß Anspruch 3 zusammen jeweils einzelne zur Aufnahme der Kugelrollen geeignete Käfigtaschen, deren Kontur jeweils der Querschnittskontur der Kugelrollen der jeweiligen Reihe entspricht.

Die Bildung der ineinander verschachtelten Konturen beider Lagerkäfige erfolgt nach Anspruch 4 schließlich dadurch, dass der durchmesserkleinere Käfigring des Lagerkäfigs der Kugelrollen der Reihe mit dem größeren Teilkreis und der durchmessergrößere Käfigring des Lagerkäfigs der Kugelrollen der Reihe mit dem kleineren Teilkreis so bemessen sind, dass diese in Montagestellung der Lagerkäfige übereinander angeordnet sind.

Dabei können die Oberseite des durchmesserkleineren Käfigrings des Lagerkäfigs der einen Reihe Kugelrollen und die Unterseite des durchmessergrößeren Käfigrings des Lagerkäfigs der anderen Reihe Kugelrollen zueinander beabstandet jeweils auf der Ebene der Rotationsachsen zweier benachbarter Kugelrollen angeordnet sein, um somit eine mit Reibung verbundene Berührung der Lagerkäfige auszuschließen.

Gemäß Anspruch 3 zeichnet sich das erfindungsgemäß ausgebildete Schrägwälzlager darüber hinaus noch dadurch aus, dass dessen gesonderten Lagerkäfige zumindest teilweise ineinander verschachtelte Konturen aufweisen die am inneren Lagerring angeordnete Laufbahn der Kugelrolle der Reihe mit dem kleineren Teilkreis ebenfalls mit einer einseitigen radienförmigen Verlängerung ausgebildet ist. Die Ausbildung der Lagerkäfige mit ineinander verschachtelten Konturen dient dabei dem Zweck, den durch die nebeneinander angeordneten Lagerkäfige mehr benötigten axialen Bauraum auf ein Minimum zu reduzieren, während die einseitige radienförmige Verlängerung der Laufbahn der Kugelrollen der Reihe mit dem kleineren Teilkreis ebenso wie die Verlängerung der Laufbahn der Kugelrollen der Reihe mit dem größeren Teilkreis der Vergrößerung der Kontaktflächen der Kugelrollen zu ihren Laufbahnen für den Fall eines sich im Lagerbetrieb ändernden Druckwinkels dient. Die Laufbahnen im äußeren Lagerring weisen dabei jeweils an ihren den Laufbahnverlängerungen am inneren Lagerring diagonal gegenüberliegenden Seiten ebenfalls entsprechende Verlängerungen auf, wobei die Verlängerungen der Laufbahnen im inneren Lagerring im Querschnitt bevorzugt radienförmig ausgebildet sind, während die Verlängerungen der Laufbahnen im äußeren Lagerring im Querschnitt axial linienförmig verlaufen und vor allem der erleichterten Lagermontage dienen.

Danach kann es bei dem erfindungsgemäß ausgebildeten Schrägwälzlager vorgesehen sein, dass der Durchmesser der Kugelrollen der Reihe auf dem größeren Teilkreis bevorzugt größer als der Durchmesser der Kugelrollen der Reihe mit dem kleineren Teilkreis ist und die jeweils benachbarten Kugelrollen beider Reihen jeweils eigene, radial höhenversetzt zueinander angeordnete Rotationsachsen aufweisen. Die Ausbildung der Kugelrollen beider Reihen mit unterschiedlichen Durchmessern hat sich dabei hinsichtlich der aufzunehmenden Radial- und Axialkräfte als besonders vorteilhaft erwiesen, wobei es je nach Anwendung des erfindungsgemäß ausgebildeten Schrägwälzlagers auch von Vorteil sein kann, beide Reihen der Kugelrollen mit gleichen Durchmessern auszubilden. Die Anordnung beider Reihen der Kugelrollen auf radial höhenversetzt zueinander angeordneten Rotationsachsen hat sich dagegen zur Optimierung der Laufbahnanordnungen in der Lagerringen sowie zur Verwendung von Kugelrollen mit Standardabmessungen als zweckmäßig erwiesen und ist dadurch möglich, da kein Synchronlauf der jeweils benachbarten Kugelrollen beider Reihen mehr vorgesehen ist und beide Reihen in gesonderten Lagerkäfigen geführt werden. Eine Anordnung der jeweils benachbarten Kugelrollen beider Reihen auf einer gemeinsamen Rotationsachse ist jedoch auch bei der getrennten Käfigführung beider Reihen der Kugelrollen möglich und soll deshalb vom Schutzumfang der Erfindung nicht ausgeschlossen sein.

### Kurze Beschreibung der Zeichnungen

Eine bevorzugte Ausführungsform des erfindungsgemäß ausgebildeten Schrägwälzlagers wird nachfolgend unter Bezugnahme auf die beigefügten Zeichnungen näher erläutert. Dabei zeigen:
- Figur 1: eine Draufsicht auf ein erfindungsgemäß ausgebildetes Tandem-Kugelrollenlager;
- Figur 2: den Querschnitt A - A durch das erfindungsgemäß ausgebildete Tandem-Kugelrollenlager nach Figur 1;
- Figur 3: eine Explosionsdarstellung des erfindungsgemäß ausgebildeten Tandem-Kugelrollenlagers;
- Figur 4: eine vergrößerte Darstellung der Einzelheit Z des erfindungsgemäß ausgebildeten Tandem-Kugelrollenlagers gemäß Figur 1.

### Ausführliche Beschreibung der Zeichnungen

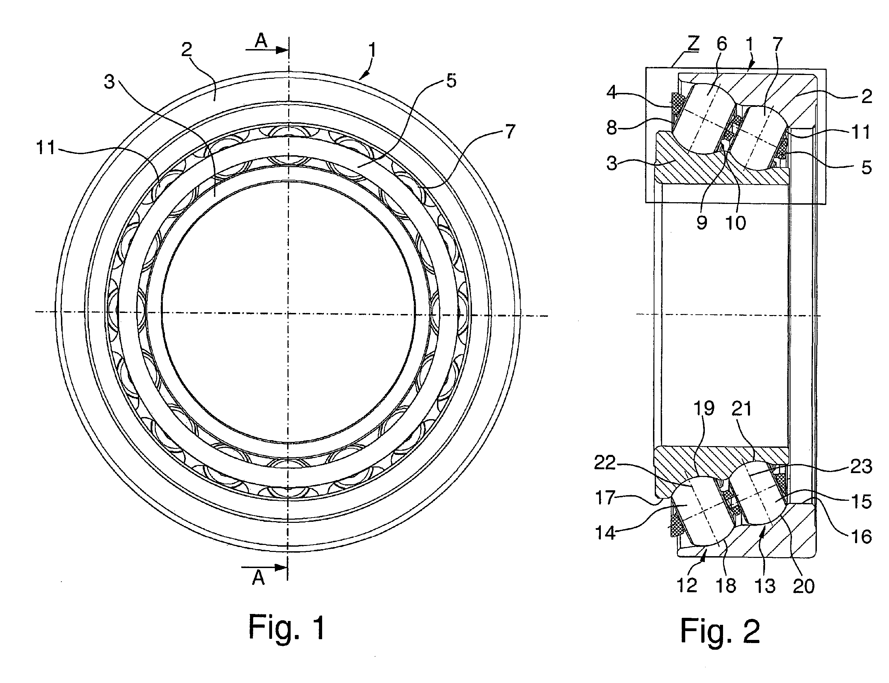

Aus den Figur 1 bis 3 gehen verschiedene Ansichten eines als Tandem-Kugelrollenlager 1 ausgebildeten Schrägwälzlagers hervor, welches im Wesentlichen aus einem äußeren Lagerring 2 und einem inneren Lagerring 3 sowie aus einer Vielzahl zwischen diesen Lagerringen 2, 3 angeordneter und in Umfangsrichtung gleichmäßig beabstandet zueinander gehaltener Kugelrollen 6, 7 besteht. Deutlich sichtbar sind diese jeweils zwei symmetrisch von einer Kugelgrundform abgeflachte, parallel zueinander angeordnete Seitenflächen 8, 9 und 10, 11 aufweisenden Kugelrollen 6, 7 dabei in zwei Reihen 12, 13 mit unterschiedlichen Teilkreisdurchmessern höhenversetzt nebeneinander angeordnet, wobei die Kugelrollen 6, 7 beider Reihen 12, 13 mit ihren Laufflächen 14, 15 in jeweils zwei in die Innenseite 16 des äußeren Lagerrings 2 und in die Außenseite 17 des inneren Lagerrings 3 eingearbeitete rillenförmigen Laufbahnen 18, 19 und 20, 21 abrollen, die in den Zeichnungen beispielhaft parallel zueinander verlaufende und in einem Druckwinkel α zu einer Lagerradialachse angestellte Druckwinkelachsen 22, 23 aufweisen, aber auch zur optimalen Anpassung an bestimmte Betriebsbedingungen unterschiedliche Druckwinkel α aufweisen können.

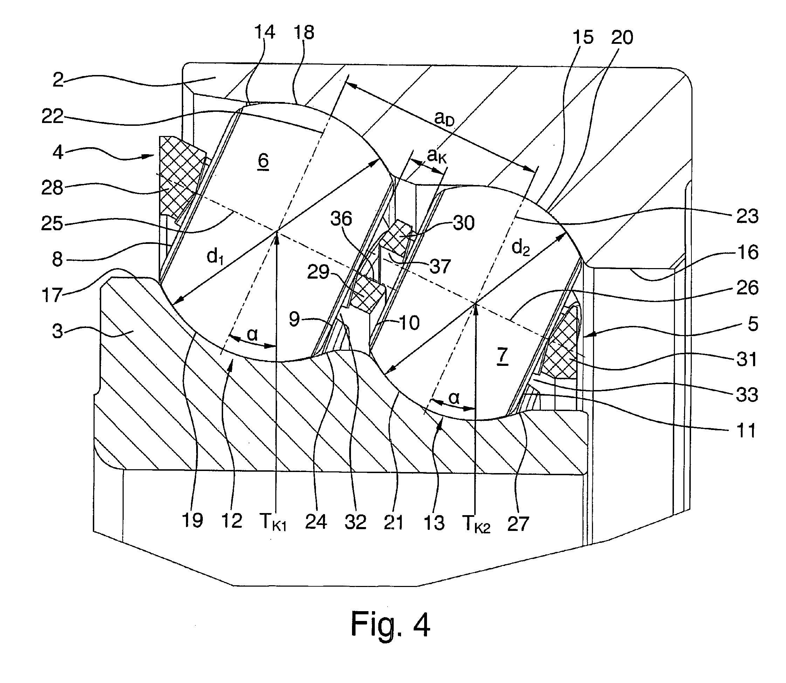

Durch die in Figur 4 vergrößert dargestellte Einzelheit Z gemäß Figur 1 wird darüber hinaus deutlich, dass die Druckwinkelachsen 22, 23 der Laufbahnen 18, 19 und 20, 21 der jeweils benachbarten Kugelrollen 6, 7 beider Reihen 12, 13 erfindungsgemäß einen solchen Abstand a_{D} zueinander aufweisen, dass zwischen den Kugelrollen 6, 7 ein gegenseitige Reibkontakte ausschließenden Abstand a_{K} entsteht und dass die Führung beider Reihen 12, 13 der Kugelrollen 6, 7 in zwei gesonderten Lagerkäfigen 4, 5 erfolgt. Die am inneren Lagerring 3 angeordnete Laufbahn 19 der Kugelrollen 6 der Reihe 12 mit dem größeren Teilkreis T_{K1} ist dabei unter Nutzung des Abstandes a_{K.} zwischen den Kugelrollen 6, 7 zusätzlich mit einer einseitigen radienförmigen Verlängerung 24 ausgebildet, die der Vergrößerung der Kontaktflächen der Kugelrollen 6 zu ihrer Laufbahn19 für den Fall eines sich im Lagerbetrieb ändernden Druckwinkels α dient.

Desweiteren ist aus Figur 4 ersichtlich, dass der Durchmesser d₁ der Kugelrollen 6 der Reihe 12 auf dem größeren Teilkreis T_{K1} größer als der Durchmesser d₂ der Kugelrollen 7 der Reihe 13 mit dem kleineren Teilkreis T_{K2} ist und dass die jeweils benachbarten Kugelrollen 6, 7 beider Reihen 12, 13 jeweils eigene, radial höhenversetzt zueinander angeordnete Rotationsachsen 25, 26 aufweisen. Die Ausbildung der Kugelrollen 6, 7 beider Reihen 12, 13 mit unterschiedlichen Durchmessern d₁, d₂ ist dabei hinsichtlich der aufzunehmenden Radial- und Axialkräfte besonders vorteilhaft, während die Anordnung beider Reihen 12, 13 der Kugelrollen 6, 7 auf radial höhenversetzt zueinander angeordneten Rotationsachsen 25, 26 zur Optimierung der Anordnung der Laufbahnen 18, 19 und 20, 21 in der Lagerringen 2, 3 sowie zur Verwendung von Kugelrollen 6, 7 mit Standardabmessungen zweckmäßig ist.

Darüber hinaus ist aus der Darstellung gemäß Figur 4 noch erkennbar, dass die gesonderten Lagerkäfige 4, 5 teilweise ineinander verschachtelte Konturen aufweisen, mit denen der durch die nebeneinander angeordneten Lagerkäfige 4, 5 mehr benötigte axiale Bauraum auf ein Minimum zu reduziert wird und dass die am inneren Lagerring 3 angeordnete Laufbahn 21 der Kugelrollen 7 der Reihe 13 mit dem kleineren Teilkreis T_{K2} ebenfalls mit einer einseitigen radienförmigen Verlangerung 27 ausgebildet ist, die ebenso wie die Verlängerung 24 der Laufbahn 19 der Kugelrollen 6 der Reihe 12 mit dem größeren Teilkreis T_{K1} der Vergrößerung der Kontaktflächen der Kugelrollen 7 zu ihrer Laufbahn 21 für den Fall eines sich im Lagerbetrieb ändernden Druckwinkels α dient.

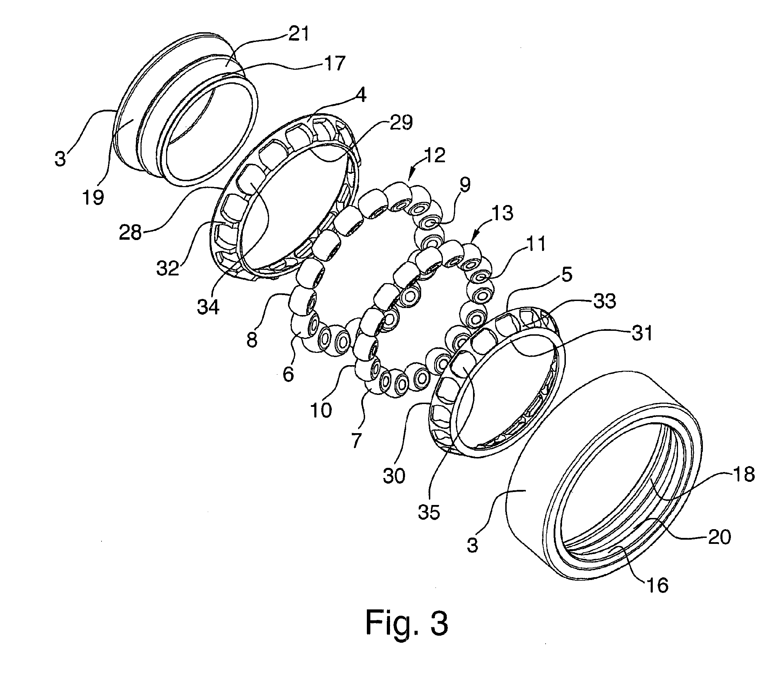

Durch Figur 3 wird dabei deutlich, dass beide Lagerkäfige 4, 5 des Tandem-Kugelrollenlagers 1 als Kunststoff-Fensterkäfige ausgebildet sind, die jeweils aus einem Käfigring 28, 30 mit größerem Durchmesser und einem Käfigring 29, 31 mit kleinerem Durchmesser sowie einer Vielzahl, die Käfigringe 28, 29 und 30, 31 miteinander verbindender Käfigstege 32, 33 bestehen. Die Käfigringe 28, 29 und 30, 31 und die Käfigstege 32, 33 beider Lagerkäfige 4, 5 bilden dabei zusammen jeweils einzelne zur Aufnahme der Kugelrollen 6, 7 geeignete Käfigtaschen 34, 35, deren Kontur jeweils der Querschnittskontur der Kugelrollen 6, 7 der jeweiligen Reihe 12, 13 entspricht.

Die Bildung der ineinander verschachtelten Konturen beider Lagerkäfige 4, 5 erfolgt dann, wie wiederum in Figur 4 gezeigt wird, schließlich dadurch, dass der durchmesserkleinere Käfigring 29 des Lagerkäfigs 4 der Kugelrollen 6 der Reihe 12 mit dem größeren Teilkreis T_{K1} und der durchmessergrößere Käfigring 30 der Kugelrollen 7 der Reihe 13 mit dem kleineren Teilkreis T2 so bemessen sind, dass diese in Montagestellung der Lagerkäfige 4, 5 übereinander angeordnet sind. Dabei sind die Oberseite 36 des durchmesserkleineren Käfigrings 29 des Lagerkäfigs 4 der Reihe 12 der Kugelrollen 6 und die Unterseite 37 des durchmessergrößeren Käfigrings 30 des Lagerkäfigs 5 der Reihe 13 der Kugelrollen 7 zueinander beabstandet jeweils auf der Ebene der Rotationsachsen 25, 26 zweier benachbarter Kugelrollen 6, 7 angeordnet, um eine mit Reibung verbundene Berührung der Lagerkäfige 4, 5 auszuschließen.

### Bezugszeichenliste

- 1: Tandem-Kugelrollenlager
- 2: äußerer Lagerring
- 3: innerer Lagerring
- 4: Lagerkäfig für 6
- 5: Lagerkäfig für 7
- 6: Kugelrollen
- 7: Kugelrollen
- 8: Seitenfläche von 6
- 9: Seitenfläche von 6
- 10: Seitenfläche von 7
- 11: Seitenfläche von 7
- 12: Reihe von 6
- 13: Reihe von 7
- 14: Laufflächen von 6
- 15: Laufflächen von 7
- 16: Innenseite von 2
- 17: Außenseite von 3
- 18: Laufbahn von 6 in 16
- 19: Laufbahn von 6 in 17
- 20: Laufbahn von 7 in 16
- 21: Laufbahn von 7 in 17
- 22: Druckwinkelachse von 12
- 23: Druckwinkelachse von 13
- 24: Verlängerung von 18
- 25: Rotationsachse von 6
- 26: Rotationsachse von 7
- 27: Verlängerung von 20
- 28: Käfigring von 4
- 29: Käfigring von 4
- 30: Käfigring von 5
- 31: Käfigring von 5
- 32: Käfigstege von 4
- 33: Käfigstege von 5
- 34: Käfigtaschen in 4
- 35: Käfigtaschen in 5
- 36: Unterseite von 29
- 37: Oberseite von 30
- α: Druckwinkel
- a_{D}: Abstand zwischen 22 und 23
- a_{K}: Abstand zwischen 5 und 6
- T_{K1}: Teilkreis von 12
- T_{K2}: Teilkreis von 13
- d₁: Durchmesser von 6
- d₂: Durchmesser von 7

## Patentansprüche

1. Schrägwälzlager, insbesondere zweireihiges Tandem-Kugelrollenlager (1), im Wesentlichen bestehend aus einem äußeren Lagerring (2) und einem inneren Lagerring (3) sowie aus einer Vielzahl zwischen diesen Lagerringen (2, 3) angeordneter, jeweils zwei symmetrisch von einer Kugelgrundform abgeflachte und parallel zueinander angeordnete Seitenflächen (8, 9, 10, 11) aufweisende Kugelrollen (6, 7), die in zwei Reihen (12, 13) mit unterschiedlichen Teilkreisdurchmessern höhenversetzt nebeneinander angeordnet sind und durch zwei gesonderte sowie zueinander beabstandete Lagerkäfige (4, 5) in Umfangsrichtung in gleichmäßigen Abständen zueinander gehalten werden, wobei die Kugelrollen (6, 7) beider Reihen (12, 13) einen gegenseitige Reibkontakte ausschließenden Abstand (a_{K}) zueinander aufweisen und mit ihren Laufflächen (14, 15) in jeweils zwei in die Innenseite (16) des äußeren Lagerrings (2) und in die Außenseite (17) des inneren Lagerrings (3) eingearbeitete rillenförmigen Laufbahnen (18, 19, 20, 21) abrollen, die in einem Druckwinkel (α) zu einer Lagerradialachse angestellte Druckwinkelachsen (22, 23) aufweisen, **dadurch gekennzeichnet, dass** beide Lagerkäfige (4, 5) zur axialen Bauraumreduzierung des Kugelrollenlagers (1) zumindest teilweise ineinander verschachtelte Konturen aufweisen und die am inneren Lagerring (3) angeordnete Laufbahn (19) der Kugelrollen (6) der Reihe (12) mit dem größeren Teilkreis (T_{K1}) unter Nutzung dieses Abstandes (a_{K}) mit einer einseitigen radienförmigen Verlängerung (24) ausgebildet ist.

2. Schrägwälzlager nach Anspruch 1, **dadurch gekennzeichnet, dass** beide Lagerkäfige (4, 5) des Kugelrollenlagers (1) bevorzugt als Kunststoff-Fensterkäfige ausgebildet sind, die jeweils aus einem Käfigring (28, 30) mit größerem Durchmesser und einem Käfigring (29, 31) mit kleinerem Durchmesser sowie einer Vielzahl, die Käfigringe (28, 29 und 30, 31) miteinander verbindender Käfigstege (32, 33) bestehen.

3. Schrägwälzlager nach Anspruch 2, **dadurch gekennzeichnet, dass** die Käfigringe (28, 29 und 30, 31) und die Käfigstege (32, 33) beider Lagerkäfige (4, 5) des Kugelrollenlagers (1) zusammen jeweils einzelne zur Aufnahme der Kugelrollen (6, 7) geeignete Käfigtaschen (34, 35) bilden, deren Kontur der Querschnittskontur der Kugelrollen (6, 7) der jeweiligen Reihe (12, 13) entspricht.

4. Schrägwälzlager nach Anspruch 3, **dadurch gekennzeichnet, dass** der durchmesserkleinere Käfigring (29) des Lagerkäfigs (4) der Kugelrollen (6) der Reihe (12) mit dem größeren Teilkreis (T_{K1}) und der durchmessergrößere Käfigring (30) des Lagerkäfigs (5) der Kugelrollen (7) der Reihe (13) mit dem kleineren Teilkreis (T_{K2}) in Montagestellung der Lagerkäfige (4, 5) übereinander angeordnet sind.

5. Schrägwälzlager nach Anspruch 1, **dadurch gekennzeichnet, dass** die am inneren Lagerring (3) angeordnete Laufbahn (21) der Kugelrollen (7) der Reihe (13) mit dem kleineren Teilkreis (T_{K2}) ebenfalls mit einer einseitigen radienförmigen Verlängerung (27) ausgebildet ist.

## Claims

1. Angular contact rolling-element bearing, especially double row ball roller bearing (1) in tandem arrangement, consisting essentially of an outer bearing ring (2) and an inner bearing ring (3) and of a plurality of ball rollers (6, 7), each having two respective lateral faces (8, 9, 10, 11) arranged parallel to one another and flattened symmetrically from a spherical basic shape, arranged between said bearing rings (2, 3), which ball rollers (6, 7) are arranged with a vertical offset one beside the other in two rows (12, 13) with different reference circle diameters, and are held at uniform distances from one another in the circumferential direction by two separate bearing cages (4, 5) which are spaced apart from one another, the ball rollers (6, 7) of the two rows (12, 13) having a distance (aₓ) from one another which excludes mutual frictional contact and running with their running faces (14, 15) in two respective groove-shaped raceways (18, 19, 20, 21) worked into the inner face (16) of the outer bearing ring (2) and into the outer face (17) of the inner bearing ring (3), which raceways (18, 19, 20, 21) have pressure angle axes (22, 23) pitched at a pressure angle (α) with respect to a bearing radial axis, **characterized in that** the two bearing cages (4, 5) have contours which are nested at least partially one inside the other in order to reduce the axial space requirement of the ball roller bearing (1), and the raceway (19), arranged on the inner bearing ring (3), of the ball rollers (6) of the row (12) with the larger reference circle (T_{K1}) is configured on one side with a radial extension (24) which utilizes said distance (a_{K}).

2. Angular contact rolling-element bearing according to Claim 1, **characterized in that** the two bearing cages (4, 5) of the ball roller bearing (1) are preferably in the form of plastics window cages which consist respectively of a cage ring (28, 30) of larger diameter and a cage ring (29, 31) of smaller diameter, and of a plurality of cage webs (32, 33) connecting the cage rings (28, 29 and 30, 31) to one another.

3. Angular contact rolling-element bearing according to Claim 2, **characterized in that** the cage rings (28, 29 and 30, 31) and the cage webs (32, 33) of the two bearing cages (4, 5) of the ball roller bearing (1) together form respective individual cage pockets (34, 35) suitable for receiving the ball rollers (6, 7) and having a contour matching the cross-sectional contour of the ball rollers (6, 7) of the respective rows (12, 13).

4. Angular contact rolling-element bearing according to Claim 3, **characterized in that** the cage ring (29) of smaller diameter of the bearing cage (4) of the ball rollers (6) of the row (12) with the larger reference circle (T_{K1}), and the cage ring (30) of larger diameter of the bearing cage (5) of the ball rollers (7) of the row (13) with the smaller reference circle (T_{K2}), are arranged one above the other in the assembly position of the bearing cages (4, 5).

5. Angular contact rolling-element bearing according to Claim 1, **characterized in that** the raceway (21), arranged on the inner bearing ring (3), of the ball rollers (7) of the row (13) with the smaller reference circle (T_{K2}) is likewise configured with a radial extension (27) on one side.

## Revendications

1. Palier à roulement à contact oblique, en particulier palier à rouleaux sphériques en tandem à deux rangées (1), constitué essentiellement d'une bague de palier extérieure (2) et d'une bague de palier intérieure (3) ainsi que d'une pluralité de rouleaux sphériques (6, 7) disposés entre ces bagues de palier (2, 3), présentant à chaque fois deux faces latérales (8, 9, 10, 11) aplaties symétriquement par rapport à une forme de base sphérique et disposées parallèlement l'une à l'autre, lesquels rouleaux sphériques sont disposés les uns à côté des autres de manière décalée en hauteur en deux rangées (12, 13) avec des diamètres de cercles partiels différents, et sont maintenus dans la direction périphérique à égale distance les uns des autres par deux cages de palier (4, 5) séparées et espacées l'une de l'autre, les rouleaux sphériques (6, 7) des deux rangées (12, 13) présentant un espacement (a_{K}) mutuel excluant un contact de friction entre eux et roulant avec leurs surfaces de roulement (14, 15) dans deux pistes de roulement (18, 19, 20, 21) en forme de gorges pratiquées à chaque fois dans le côté intérieur (16) de la bague de palier extérieure (2) et dans le côté extérieur (17) de la bague de palier intérieure (3), les pistes de roulement présentant des axes angulaires de pression (22, 23) inclinés suivant un angle de pression (α) par rapport à un axe radial du palier, **caractérisé en ce que** les deux cages de palier (4, 5) présentent, en vue d'une réduction de l'encombrement axial du palier à rouleaux sphériques (1), des contours au moins en partie emboîtés les uns dans les autres, et la piste de roulement (19) des rouleaux sphériques (6) de la rangée (12) ayant le plus grand cercle partiel (T_{K1}) disposée sur la bague de palier intérieure (3) est réalisée en utilisant cet espacement (a_{K}) avec un prolongement (24) en forme arrondie d'un seul côté.

2. Palier à roulement à contact oblique selon la revendication 1, **caractérisé en ce que** les deux cages de palier (4, 5) du palier à rouleaux sphériques (1) sont de préférence réalisées sous forme de cages à fenêtres en plastique, qui se composent à chaque fois d'une bague de cage (28, 30) de plus grand diamètre et d'une bague de cage (29, 31) de plus petit diamètre ainsi que d'une pluralité de nervures de cage (32, 33) reliant les unes aux autre les bagues de cage (28, 29 et 30, 31).

3. Palier à roulement à contact oblique selon la revendication 2, **caractérisé en ce que** les bagues de cage (28, 29, et 30, 31) et les nervures de cage (32, 33) des deux cages de palier (4, 5) du palier à rouleaux sphériques (1) forment ensemble à chaque fois des cavités de cage individuelles (34, 35) appropriées pour recevoir les rouleaux sphériques (6, 7), dont le contour correspond au contour en section transversale des rouleaux sphériques (6, 7) de la rangée respective (12, 13).

4. Palier à roulement à contact oblique selon la revendication 3, **caractérisé en ce que** la bague de cage (29) de plus petit diamètre de la cage de palier (4) des rouleaux sphériques (6) de la rangée (12) ayant le plus grand cercle partiel (T_{K1}) et la bague de cage (30) de plus grand diamètre de la cage de palier (5) des rouleaux sphériques (7) de la rangée (13) ayant le plus petit cercle partielle (T_{K2}) sont disposées l'une au-dessus de l'autre dans la position de montage des cages de palier (4, 5).

5. Palier à roulement à contact oblique selon la revendication 1, **caractérisé en ce que** la piste de roulement (21) des rouleaux sphériques (7) de la rangée (13) ayant le plus petit cercle partiel (T_{K2}) disposée sur la bague de palier intérieure (3) est également réalisée avec un prolongement (27) de forme arrondie d'un seul côté.
